# DEMANDE DE BREVET EUROPEEN

(11) **EP 2 200 137 A2**
(43) Date de publication de la demande: **23.06.2010**
(21) Numéro de dépôt: 09175089.3
(22) Date de dépôt: 05.11.2009
(51) Int. Cl.: H02G 3/04, G02B 6/44

(54) **Procédé de montage d'une cassette de gestion d'au moins un câble de données principal et cassette correspondante**

(30) Priorité: 18.12.2008 FR 0858765
(71) Demandeur: Nexans, 75008 Paris (FR)
(72) Inventeur: Monatlik, Jean-Christophe, 75008 Paris (FR); Milanowski, Michel, 60540 Anserville (FR); Crepin, Benoît, 75008 Paris (FR)
(74) Mandataire: Lenne, Laurence

(57) **Abrégé**

L'invention concerne un procédé de montage d'une cassette de gestion (2) d'au moins un câble de données principal (CP).

Selon l'invention, ladite cassette est montée dans une goulotte (1) d'amenée de câbles de données principaux (CP) comportant un profilé (1A) parallélépipédique fermé par un couvercle (1B) sur une de ces faces dite face d'ouverture, ledit profilé (1A) comportant à proximité de ladite face d'ouverture des moyens d'accrochage de ladite cassette de gestion (2).

## Description

L'invention concerne un procédé de montage d'une cassette de gestion d'au moins un câble de données principal et une cassette associée pour raccordement de câbles de données d'abonnés.

Par goulotte, il est entendu ci-après un profilé de logement des câbles.

Les câbles de données principaux sont constitués d'un ensemble de sous-câbles appelés couramment « pigtails » ou micro-tubes et comportant chacun un certain nombre de câbles comportant chacun au moins une fibre optique.

Lors de l'installation dans un immeuble, les câbles principaux sont amenés à l'intérieur d'une goulotte et, à chaque étage, un micro-tube d'un câble principal est dévié de cette goulotte et un certain nombre de fibres optiques est raccordé dans un boîtier de raccordement, aux câbles d'abonnés équipant chaque appartement ou local de cet étage.

Ce boîtier de raccordement s'ajoute donc à la goulotte et pose un problème d'encombrement et un souci esthétique.

L'invention propose un procédé de montage d'une cassette de déviation, permettant de supprimer tout boîtier de raccordement supplémentaire, tout en assurant une parfaite gestion des câbles principaux et d'abonnés.

Pour ce faire, l'invention propose un procédé de montage d'une cassette de gestion d'au moins un câble de données principal, **caractérisé en ce que** ladite cassette est montée dans une goulotte d'amenée de câbles de données principaux comportant un profilé parallélépipédique fermé par un couvercle sur une de ces faces dite face d'ouverture, ledit profilé comportant à proximité de ladite face d'ouverture des moyens d'accrochage de ladite cassette de gestion.

Par cet accrochage de la cassette, juste sous le couvercle, il est possible d'accéder à la cassette sans intervenir sur les câbles principaux non concernés logés dans la goulotte.

L'invention concerne également une cassette de dérivation d'au moins un câble de données principal vers au moins un câble d'abonné, pour la mise en oeuvre de ce procédé, et comportant des supports d'épissure d'au moins une fibre optique avec un câble d'abonné, **caractérisée en ce qu**'elle comporte au moins un moyen de fixation d'un câble de données principal sur une de ces faces, dite première face, et une fenêtre de passage d'au moins une fibre optique dégagé du dit câble principal, de cette première face vers l'autre face de la cassette dite seconde face.

Selon un mode de réalisation préféré, elle comporte également des moyens de fixation d'au moins un câble d'abonné sur ladite seconde face.

Lesdits moyens de fixation sont avantageusement des colliers montés sur des pattes agencées sur deux bords opposés de la cassette.

La cassette peut comporter sur ses deux bords longitudinaux des languettes d'encliquetage avec lesdits moyens d'accrochage.

Elle peut comporter des premiers moyens de lovage de fibres optiques dégagées du dit câble principal et destinées à être raccordées et des seconds moyens de lovage différents de fibres optiques dégagées du dit câble principal et mises en attente.

L'invention concerne enfin un procédé de montage d'une telle cassette, caractérisé en ce que ladite première face est disposée vers l'intérieur du dit profilé de la goulotte et ladite seconde face vers ledit couvercle.

Une plaque de protection peut être montée sur ladite seconde face.

L'invention est décrite ci-après plus en détail à l'aide de figures ne représentant qu'un mode de réalisation préféré de l'invention.
La figure 1 est une vue en perspective et en coupe transversale d'une goulotte équipée d'une cassette conformément à l'invention.
Les figures 2 et 3 sont des vues en perspective et en coupe transversale d'une goulotte équipée d'une cassette conformément à l'invention, le couvercle de la goulotte étant retiré.
La figure 4 est une vue en perspective de la première face de la cassette conforme à l'invention.
Les figures 5 et 6 sont des vues en perspective de la seconde face de la cassette conforme à l'invention.

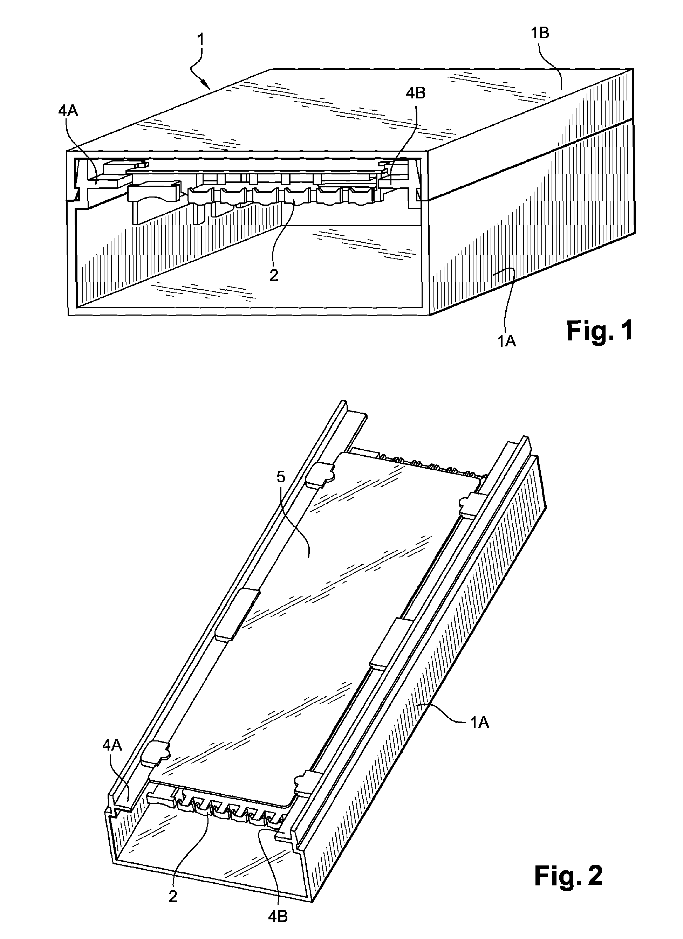

Comme représenté sur la figure 1, la goulotte 1 d'amenée de câbles de données principaux, conforme à l'invention, comporte un profilé parallélépipédique 1A fermé par un couvercle 1B sur une de ces faces dite face d'ouverture. Le profilé 1A comporte à proximité de cette face d'ouverture des moyens d'accrochage d'une cassette de gestion 2 d'au moins un câble de données principal contenu dans la gaine.

Ces moyens d'accrochage sont des moyens d'encliquetage, constitués de deux nervures 4A, 4B disposées chacune sur un bord longitudinal de la face d'ouverture et interne au profilé 1A.

Comme visible sur la figure 2, où le couvercle est enlevé, une plaque de protection 5 est montée sur la face externe de la cassette 2, dite seconde face. Cette plaque est de préférence une plaque de matière plastique transparente clippée et est destinée à protéger les fibres optiques gérés par la seconde face de la cassette 2.

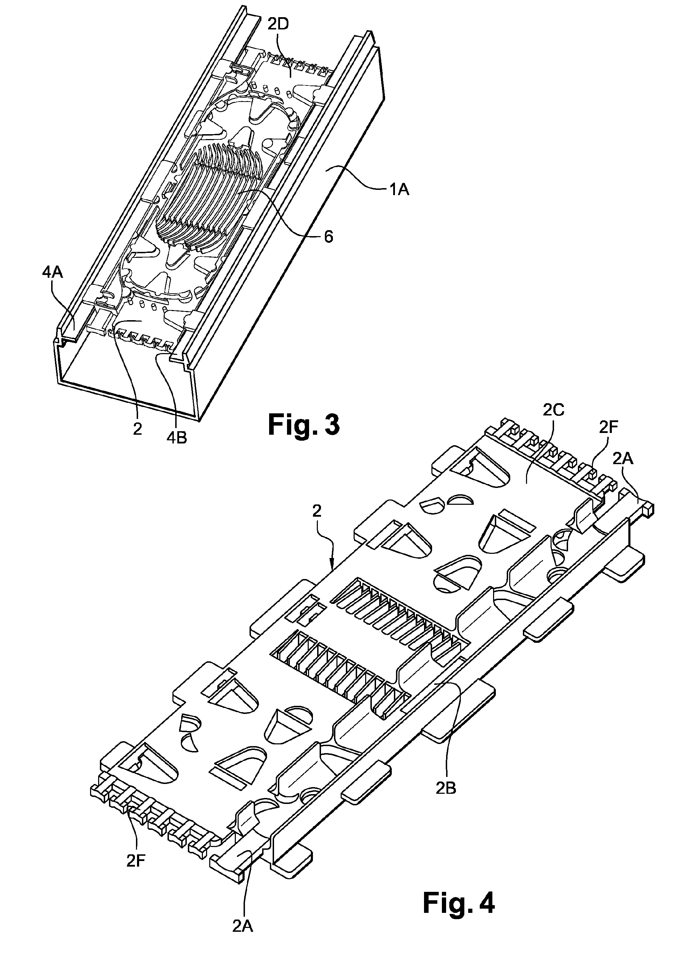

La figure 3 est une vue analogue après démontage de cette plaque de protection. La cassette 2 accrochée dans la goulotte 1 est ici une cassette de dérivation d'au moins un câble de données principal contenu dans la goulotte 1 vers au moins un câble d'abonné et comporte des supports d'épissure 6 d'au moins une fibre optique dégagée d'un câble principal avec un câble d'abonné.

Représentée seule sur les figures 4 à 6, la cassette 2 comporte au moins un moyen de fixation 2A d'un câble de données principal CP sur sa première face 2C destinée à être montée vers l'intérieur du profilé 1A, et une fenêtre 2B de passage d'au moins un micro-tube MT dégagé du câble principal CP, de la première face 2C vers l'autre face de la cassette dite seconde face 2D. Ce moyen de fixation 2A est un berceau pour câble principal associé à un collier de fixation du câble principal CP et disposé sur chaque côté transversal de la cassette

La cassette comporte également des moyens de fixation 2F d'au moins un câble d'abonné CA sur la seconde face 2D tournée vers l'extérieur du profilé 1A. Ces moyens de fixation 2F sont une rangée de pattes agencées sur chaque bord transversal de la cassette associée à des colliers montés sur ces pattes.

Pour permettre son encliquetage sur les deux nervures 4A, 4B du profilé 1A, la cassette comporte sur ses deux bords longitudinaux des languettes d'encliquetage 1G, réparties sur ces bords et disposées alternativement sur la première face 2C et sur la seconde face 2D.

La cassette 2 comporte également des premiers moyens de lovage 7A de fibres optiques dégagées du câble principal CP et destinées à être raccordées et des seconds moyens de lovage 7B différents de fibres optiques en attente.

Le procédé de montage d'une telle cassette dans une telle gaine, consiste à disposer la première face 2C vers l'intérieur du profilé 1A de la goulotte et la seconde face 2D vers le couvercle 1b et de protéger cette seconde face par montage de la plaque de protection 5.

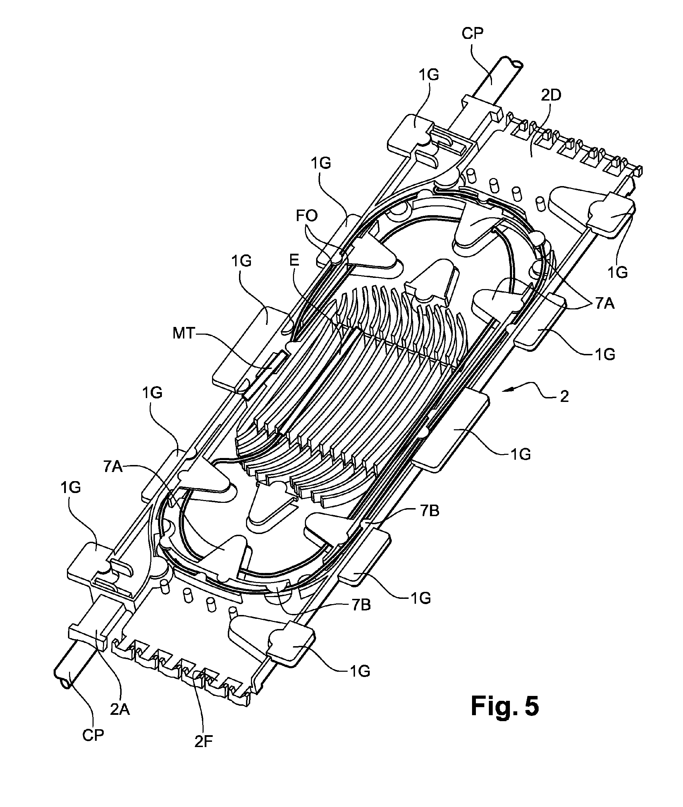

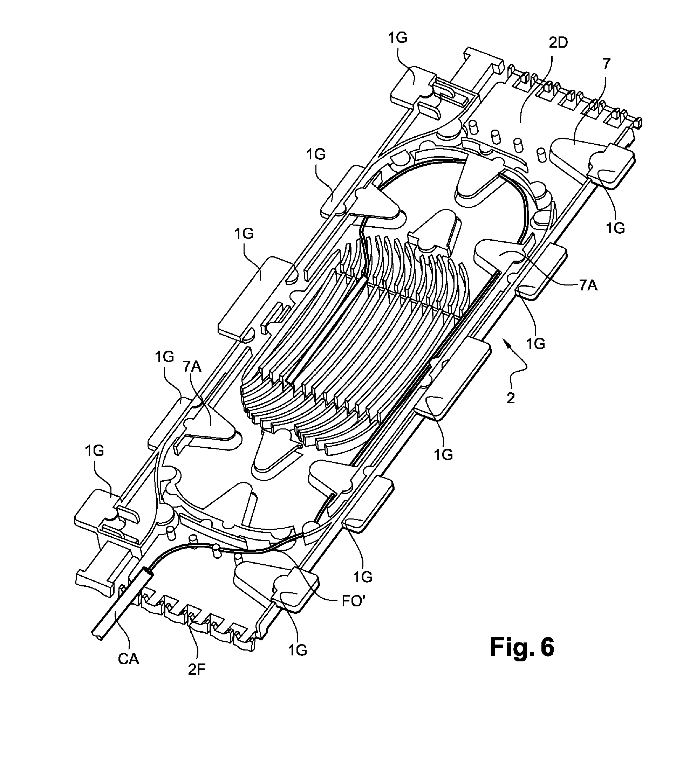

Les figures 5 et 6 illustrent deux étapes de raccordement de fibres optiques dégagées d'un câble principal CP sur un câble d'abonné CA.

Comme illustré sur la figure 5, un câble principal CP est fixé sur les deux bords transversaux de la première face interne 2C de la cassette après dégagement au moyen d'une fenêtre agencée dans le câble CP d'un micro-tube MT qui est dirigée grâce à la fenêtre de passage 2B vers la seconde face externe 2D de la cassette. De ce micro-tube MT dégainé sont dégagées des fibres optiques FO qui sont lovées soit dans les seconds moyens de lovage 7B si elles sont mises en attente, soit dans les premiers moyens de lovage 7A pour celles destinées à être raccordées par une épissure E disposée sur un support d'épissure 6 avec une fibre optique d'un câble d'abonné CA.

Les premiers moyens de lovage 7A assurent un lovage des fibres optiques contre la face externe 2D de la cassette, contre le fond de la cassette, de façon relativement interne. Les seconds moyens de lovage 7B assurent un lovage des fibres optiques en périphérie, de façon relativement externe, de telle sorte que ces dernières fibres optiques soient facilement accessibles pour leur futur raccordement, sans intervention ou risque de dommage sur les fibres optiques déjà raccordées.

Cette seconde étape est illustrée sur la figure 6. Un câble d'abonné CA est fixé sur les pattes 2F d'un des bords transversaux de la cassette 2 et une fibre optique FO' dégagée de ce câble dénudé est lovée dans les moyens de lovage 7 et raccordée à l'épissure E de la fibre optique FO.

Il est à noter que cette même cassette peut également permettre de connecter ensemble deux câbles principaux CP, si nécessaire. Dans ce cas, l'extrémité de chaque câble principal est fixée sur chaque bord transversal de la cassette au moyen des berceaux 2A et ces extrémités sont connectées ensemble.

## Revendications

1. Procédé de montage d'une cassette de gestion (2) d'au moins un câble de données principal (CP), **caractérisé en ce que** ladite cassette est montée dans une goulotte (1) d'amenée de câbles de données principaux (CP) comportant un profilé (1A) parallélépipédique fermé par un couvercle (1B) sur une de ces faces dite face d'ouverture, ledit profilé (1A) comportant à proximité de ladite face d'ouverture des moyens d'accrochage de ladite cassette de gestion (2).

2. Cassette de dérivation d'au moins un câble de données principal (CP) vers au moins un câble d'abonné (CA), pour la mise en oeuvre du procédé selon la revendication 1, et comportant des supports d'épissure (6) d'au moins une fibre optique (FO) avec un câble d'abonné, **caractérisée en ce qu'**elle comporte au moins un moyen de fixation (2A) d'un câble de données principal (CP) sur une de ces faces (2D), dite première face, et une fenêtre de passage (2B) d'au moins une fibre optique (FO) dégagé du dit câble principal (CP), de cette première face (2C) vers l'autre face (2D) de la cassette dite seconde face.

3. Cassette selon la revendication précédente, **caractérisée en ce qu'**elle comporte des moyens de fixation d'au moins un câble d'abonné (CA) sur ladite seconde face (2D).

4. Cassette selon la revendication 2 ou 3, **caractérisée en ce que** lesdits moyens de fixation sont des colliers montés sur des pattes (2F) agencées sur deux bords opposés de la cassette.

5. Cassette selon l'une des revendications 2 à 4, **caractérisée en ce qu'**elle comporte sur ses deux bords longitudinaux des languettes d'encliquetage (1G) avec lesdits moyens d'accrochage.

6. Cassette selon l'une des revendications 2 à 5, **caractérisée en ce qu'**elle comporte des premiers moyens de lovage (7A) de fibres optiques dégagées du dit câble principal (CP) et destinées à être raccordées et des seconds moyens de lovage (7B) différents de fibres optiques dégagées du dit câble principal (CP) et mises en attente.

7. Procédé de montage d'une cassette selon l'une des revendications 2 à 6 dans une goulotte (1) selon l'une des revendications 1 à 3, **caractérisé en ce que** ladite première face (2C) est disposée vers l'intérieur du dit profilé (1A) de la goulotte et ladite seconde face (2D) vers ledit couvercle (1B).

8. Procédé selon la revendication précédente, **caractérisé en ce qu'**une plaque de protection (5) est montée sur ladite seconde face (2D).
